# EUROPÄISCHE PATENTSCHRIFT

(11) **EP 2 789 913 B1**
(45) Veröffentlichungstag und Bekanntmachung des Hinweises auf die Patenterteilung: **26.10.2016**
(21) Anmeldenummer: 14001178.4
(22) Anmeldetag: 29.03.2014
(51) Int. Cl.: F23L 17/14, A01K 1/00, B01D 45/16, F17D 3/14, B01D 45/08

(54) **Vorrichtung zum Abscheiden von Flüssigkeit in einem Rohr zum Abführen von Fortluft oder Abgas und Rohr mit einer solchen**
Device for the separation of a liquid in a tube for the discharge of outgoing air or exhaust gas and tube with such a device
Dispositif de séparation de liquide dans un tube d'évacuation d'air ou de gaz de combustion et tube doté d'un tel dispositif

(30) Priorität: 12.04.2013 DE 102013006461
(43) Veröffentlichungstag der Anmeldung: 15.10.2014
(73) Patentinhaber: Südluft Systemtechnik GmbH & Co. KG, 71032 Böblingen (DE)
(72) Erfinder: Ecker, Michael, D-94486 Osterhofen (DE); Oisch, Christian, D-94244 Teisnach (DE)
(74) Vertreter: Heinrich, Hanjo

(56) Entgegenhaltungen:
- EP-A1- 2 241 809
- CN-U- 2 124 386
- DE-B4- 10 311 451
- DE-U1- 29 811 088

## Beschreibung

Die Erfindung betrifft eine Vorrichtung zum Abscheiden von Flüssigkeit im Innenbereich eines im wesentlichen vertikalen Rohrabschnitts, insbesondere eines Fortluft- oder Abgasrohres, mit
einer wendelartigen Abscheidestruktur mit einer Vielzahl von Wendelabschnitten, die entlang einer zumindest geometrischen Wendelachse angeordnet sind, wobei jeweils zwei benachbarte Wendelabschnitte in unterschiedlichen Drehwinkellagen zur Wendelachse angeordnet sind.

Außerdem betrifft die Erfindung ein Rohr zum Abführen von Fortluft oder Abgas mit einer Vorrichtung zum Abscheiden von Flüssigkeit.

Bei einem Fortluft- oder Abgasrohr muss das Eindringen von Wasser, beispielsweise in Form von Regenwasser, Hagel oder Schnee, durch das obere Ende des Rohres aus verschiedenen Gründen vermieden werden. Zum Beispiel kann das Rohr ansonsten im Laufe der Zeit korrodieren und Schaden nehmen. Darüber hinaus kann eindringendes Wasser die Vorrichtungen und Prozesse stören, in welchen die abzuführende Fortluft oder das abzuführende Abgas erzeugt werden.

Aus der DE 103 11 451 B4 ist eine Vorrichtung der eingangs genannten nach dem Oberbegriff von Anspruch 1 Art bekannt, bei welcher die Abscheidestruktur als eine Art Wendeltreppe ausgebildet ist, bei der separat voneinander angeordnete Stufen die Wendelabschnitte bilden. Zwischen den Stufen bleibt dabei ein Durchgang erhalten, durch welchen bei ungünstigen Strömungsverhältnissen Flüssigkeit an der Abscheidevorrichtung vorbei bzw. durch diese hindurch zum Einlass des Fortluft- oder Abgasrohres gelangen kann.

Es ist Aufgabe der Erfindung, eine Vorrichtung und ein Rohr zum Abführen von Fortluft oder Abgas der eingangs genannten Art zu schaffen, welche einerseits diesen Nachteil beheben und andererseits effektiv Flüssigkeit abscheiden.

Diese Aufgabe wird bei einer Vorrichtung der eingangs genannten Art dadurch gelöst, dass
jeweils zwei benachbarte Wendelabschnitte derart miteinander verbunden sind, dass zwischen zwei Wendelabschnitten wenigstens eine radial verlaufende Wendelkante ausgebildet ist und die Abscheidestruktur als durchgehende Abscheidewendel mit einer Abscheideoberfläche ausgebildet ist.

Die Abscheideoberfläche befindet sich auf derjenigen Seite der Abscheidestruktur, welche im eingebauten Zustand in Richtung auf den Auslass des Fortluft- oder Abgasrohres weist oder weisen soll. Dadurch, dass die Abscheidestruktur durchgehend ist, kann nun auch bei ungünstigen Strömungsverhältnissen oder Turbulenzen keine Flüssigkeit oder mit Feuchtigkeit beladene Luft durch die Abscheidestruktur hindurch zurück zum Einlass strömen. Somit ist die Gefahr von einem Durchdringen von Flüssigkeit zum Rohreinlass unterbunden. Darüber hinaus können sich Flüssigkeitströpfchen besonders gut an den ausgebildeten Wendelkanten zu größeren Tropfen koagulieren, wodurch eine effektive Abscheidung von Flüssigkeit auch aus Nebel erreicht wird.

Bautechnisch ist es günstig, wenn ein Wendelabschnitt als Stufenabschnitt ausgebildet ist, welcher einen Fließstufenabschnitt und einen Verbindungsstufenabschnitt umfasst, die auf der Abscheideoberfläche an der Wendelkante einen Stufenwinkel einschließen. So kann die Abscheidewendel aus identischen Bauteilen aufgebaut werden.

Abgeschiedene Flüssigkeit fließt gut ab, wenn der Fließstufenabschnitt planar ist.

Dabei ist der Fließstufenabschnitt vorzugsweise gegenüber einer Bezugsebene verkippt, die senkrecht auf der Wendelachse steht.

Ein einfacher Aufbau kann erreicht werden, wenn der Verbindungsstufenabschnitt planar ist.

In diesem Fall ist der Verbindungsstufenabschnitt bevorzugt parallel zu einer Achsenebene ausgerichtet ist, welche die Wendelachse umfasst.

Erneut bautechnisch ist es von Vorteil, wenn zwei benachbarte Stufenabschnitte separate gekantete Stufenelemente sind, die an komplementär zueinander ausgebildeten Befestigungsflanschen miteinander verbunden sind. Zwei solche Befestigungsflansche können vorzugsweise durch Nieten oder Heften miteinander verbunden werden.

Alternativ oder ergänzend kann ein Wendelabschnitt auch als Wölbabschnitt ausgebildet sein, dessen Abscheideoberfläche in Blickrichtung auf die Abscheideoberfläche konkav gewölbt ist. Die Wendelkanten sind dann an den Stoßstellen zweier Wölbabschnitte ausgebildet.

Hierbei sind zwei benachbarte Wölbabschnitte vorzugsweise separate gewölbte Elemente, die an komplementär zueinander ausgebildeten Befestigungsflanschen miteinander verbunden sind. Auch hier kann die Befestigung beispielsweise durch Nieten oder Heften erfolgen.

Eine sichere Lagerung der Wendelabschnitte kann gewährleistet werden, wenn die Abscheidestruktur ein Zentralrohr umfasst, welches die Wendelachse definiert und die Wendelabschnitte radial innen trägt.

Das Abfließen von abgeschiedener Flüssigkeit wird durch einen koaxial und im Abstand zur Abscheidestruktur angeordneten konischen Ablaufkragen begünstigt, der sich in Richtung von der Abscheidestruktur weg erweitert, wobei die lichte Kontur der Abscheidestruktur den Ablaufkragen wenigstens teilweise überlappt. Der Ablaufkragen kann dann zu einem Ablaufrohr eines Fortluft- oder Abgasrohres führen.

Im Hinblick auf die Montage der Vorrichtung in einem Fortluft- oder Abgasrohr ist es günstig, wenn diese eine Distanzhülse umfasst, welche koaxial zu der Abscheidestruktur angeordnet ist und die Abscheidestruktur und/oder das Zentralrohr und/oder den Ablaufkragen trägt. Die Distanzhülse kann insbesondere komplementär zum Innendurchmesser des zu verbauenden Fortluft- oder Abgasrohres ausgebildet sein, so dass die Vorrichtung hierdurch einfach in einem solchen Rohr angeordnet, positioniert und befestigt werden kann.

Im Hinblick auf ein Rohr zum Abführen von Fortluft oder Abgas wird die oben genannte Aufgabe dadurch gelöst, dass im Innenbereich eines Rohrabschnitts eine Vorrichtung mit einigen oder allen der oben erläuterten Merkmale angeordnet ist.

Nachfolgend werden Ausführungsbeispiele der Erfindung anhand der Zeichnungen näher erläutert. In diesen zeigen:
- Figur 1: eine Seitenansicht auf ein Fortluftrohr in Durchsicht, in welchem eine Vorrichtung zum Abscheiden von Flüssigkeit gemäß einem ersten Ausführungsbeispiel angeordnet ist;
- Figur 2: eine Ansicht von oben auf das Fortluftrohr mit der Vorrichtung zum Abscheiden von Flüssigkeit;
- Figur 3: eine perspektivische Ansicht auf das Fortluftrohr mit der Vorrichtung zum Abscheiden von Flüssigkeit, wobei nur ein Wandabschnitt des Fortluftrohres gezeigt ist;
- Figur 4: eine der Figur 3 entsprechende perspektivische Ansicht auf das Fortluftrohr mit einer Vorrichtung zum Abscheiden von Flüssigkeit gemäß einem zweiten Ausführungsbeispiel.

In den Figuren ist mit 10 ein Rohr mit einem vertikalen Rohrabschnitt 10a bezeichnet, über welches in an und für sich bekannter Art und Weise Fortluft oder Abgas abgeführt wird, die oder das in industriellen Anlagen erzeugt wird, und welches hier ein Fortluftrohr 12 ist. Die nachfolgenden Erläuterungen gelten sinngemäß für ein entsprechendes Abgasrohr.

In dem vertikalen Rohrabschnitt 10a des Rohres 10 bzw. des Fortluftrohres 12 ist eine Abscheidevorrichtung 14 angeordnet, durch welche Flüssigkeit abgeschieden wird, die beispielsweise in Form von Regen von oben in das Fortluftrohr 10 eindringt.

Die Abscheidevorrichtung 14 umfasst eine wendelartige Abscheidestruktur 16 mit einer Vielzahl von Wendelabschnitten 18, die entlang einer Wendelachse 20 angeordnet sind und von denen nicht alle ein Bezugszeichen tragen. Die Wendelachse wird beim vorliegenden Ausführungsbeispiel durch ein Zentralrohr 22 definiert, kann jedoch auch lediglich eine geometrische Wendelachse sein. Die Wendelabschnitte 18 sind aus Blech gefertigt.

Jeder Wendelabschnitt 18 wird radial innen von dem Zentralrohr 22 getragen. Jeweils zwei benachbarte Wendelabschnitte 18 sind dabei in unterschiedlichen Drehwinkellagen zur Wendelachse 20 angeordnet.

Darüber hinaus sind jeweils zwei benachbarte Wendelabschnitte 18 derart miteinander verbunden, dass zwischen zwei Wendelabschnitten 18 eine radial verlaufende Wendelkante 24 ausgebildet ist und die Abscheidestruktur 16 als durchgehende Abscheidewendel 26 mit einer Abscheideoberfläche 28 ausgebildet ist. Die Abscheideoberfläche 28 befindet sich dabei auf derjenigen Seite der Abscheidewendel 26, welche im eingebauten Zustand in Richtung auf den Auslass des Fortluftrohres 12 weist. Auch von den Wendelkanten 24 sind nicht alle mit einem Bezugszeichen versehen.

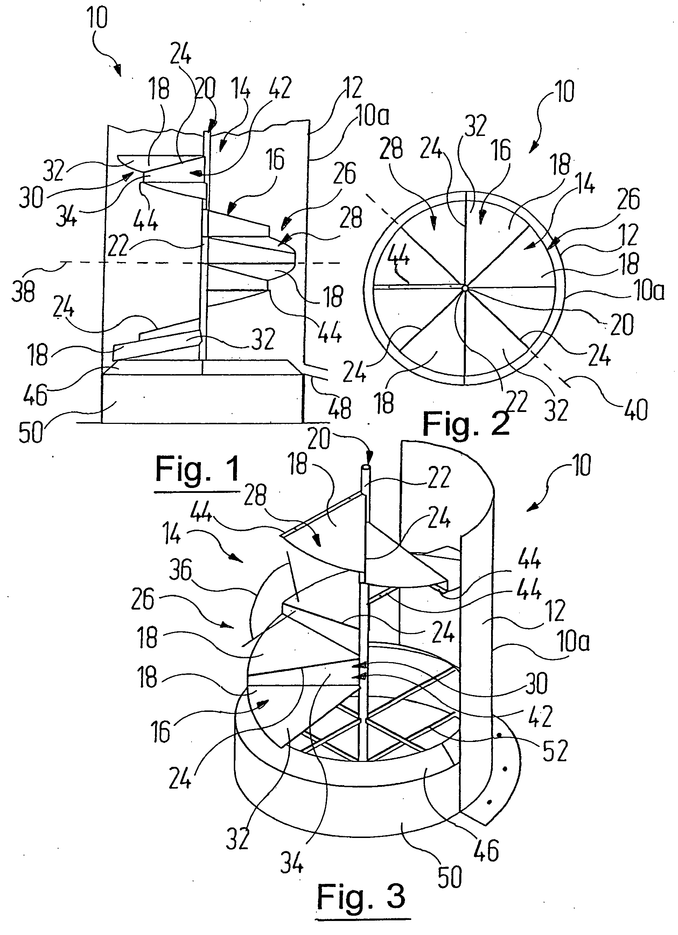

Hierzu ist jeder Wendelabschnitt 18 als Stufenabschnitt 30 ausgebildet, welcher einen Fließstufenabschnitt 32 und einen Verbindungsstufenabschnitt 34 umfasst, die auf der Abscheideoberfläche an der Wendelkante 24 einen Stufenwinkel 36 definieren, von denen einer in Figur 3 veranschaulicht ist.

Sowohl der Fließstufenabschnitt 32 als auch der Verbindungsstufenabschnitt 34 sind planar. Dies bedeutet insbesondere, dass die jeweilige Außenfläche, d.h. die Abscheidefläche 28, plan ist. Der Fließstufenabschnitt 32 jedes Stufenabschnitts 30 ist gegenüber einer Bezugsebene 38 verkippt, die senkrecht auf der Wendelachse 20 steht. Eine solche Bezugsebene 38 ist in Figur 1 gezeigt. Unmittelbar unterhalb dieser Bezugebene 38 ist in Figur 1 die Unterseite eines Fließstufenabschnitts 32 zu erkennen, der sich nach hinten und unten in Richtung hinter die Papierebene erstreckt.

Beim vorliegenden Ausführungsbeispiel beträgt der Neigungswinkel der Fließstufenabschnitte 32 gegenüber der Bezugsebene 38 etwa 10°.

Die jeweiligen Verbindungsstufenabschnitte 34 sind ebenfalls planar und zumindest parallel zu einer Achsenebene 40 ausgerichtet, welche die Wendelachse 20 umfasst. Eine solche Achsenebene 40 ist in Figur 2 zu erkennen. Beim vorliegenden Ausführungsbeispiel erstreckt sich ein Verbindungsstufenabschnitt 34 in einer solchen Achsenebene 40. Bei einer Abwandlung kann ein Verbindungsstufenabschnitt 34 jedoch auch parallel versetzt zu einer solchen Achsenebene 40 verlaufen.

Bei nicht eigens gezeigten Abwandlungen können die Fließstufenabschnitte 32 und/oder die Verbindungsstufenabschnitte 34 auch nicht planar sein. In diesen Fällen definieren die Komponenten aus sich heraus jeweils eine Hauptebene, deren Anordnung dann in Bezug auf eine Bezugsebene 38 oder eine Achsenebene 40 betrachtet wird.

Die Stufenabschnitte 30 sind jeweils separate gekantete Stufenelemente 42, welche gekantete Befestigungsflansche 44 umfassen. Die Befestigungsflansche 44 eines der Stufenelemente 42 sind dabei zu den Befestigungsflanschen 44 eines diesem Stufenelement 42 benachbarten Stufenelementes 42 komplementär ausgebildet. Zwei benachbarte Stufenelemente 42 sind an ihren Befestigungsflanschen 44 miteinander verbunden. In der Praxis sind zwei benachbarte Stufenelemente 42 an den Befestigungsflanschen 44 miteinander vernietet oder aneinander geheftet.

Bei einer nicht eigens gezeigten Abwandlung kann die gesamte Abscheidewendel 26 auch einstückig ausgebildet sind.

Beim vorliegenden Ausführungsbeispiel sind die Stufenelemente 42 in ihren Abmessungen und Geometrien so aufeinander abgestimmt, dass zwei Stufenelemente 42 ein Viertelkreissegment ergeben. Folglich wird durch insgesamt acht Stufenelemente 42 ein vollständiger Wendelgang beschrieben. Die Anzahl an Stufenelementen 42, oder allgemein ausgedrückt die Anzahl an Wendelabschnitten 18, die für einen Gang der Abscheidewendel 26 notwendig sind, kann jedoch abhängig von der Ausbildung der Komponenten variieren.

Die Abscheidevorrichtung 14 umfasst außerdem einen koaxial und im Abstand zur Abscheidestruktur 16 angeordneten konischen Ablaufkragen 46, der sich in Richtung von der Abscheidestruktur 16 weg erweitert, wobei die lichte Kontur der Abscheidestruktur 16 den Ablaufkragen 46 wenigstens teilweise überlappt. Auf diese Weise gelangt Wasser, das auf Grund der Neigung der Fließstufenabschnitte 32 radial außen von diesen heruntertropft, auf den Ablaufkragen 46 und strömt nach außen weg.

Das Fortluftrohr 12 umfasst einen Ablauf 48, der auf Höhe des Ablaufkragens 46 angeordnet ist und über welchen das Wasser von dem Fortluftrohr 12 nach außen abfließen kann. Der Ablauf 48 ist nur in Figur 1 zu erkennen.

Die Abscheidevorrichtung 14 weist zusätzlich eine Distanzhülse 50 auf, welche koaxial zu der Abscheidestruktur 16 angeordnet ist und die Abscheidestruktur 16 und/oder das Zentralrohr 22 und/oder den Ablaufkragen 46 trägt. Hierzu ist die Distanzhülse 50 durch Streben 52 mit den entsprechenden Bauteilen verbunden, was in Figur 3 zu erkennen ist, wo die Streben 52 das Zentralrohr 22 mit der Distanzhülse 50 verbinden.

Die Distanzhülse 50 hat einen geringfügig kleineren Außendurchmesser als der Innendurchmesser des Fortluftrohres 12, in dem die Abscheidevorrichtung 14 installiert werden soll.

Insgesamt ist die Abscheidevorrichtung 14 so konzipiert, dass der Außenmantel der Distanzhülse 50 am Innenmantel des zu bestückenden Fortluftrohres 12 anliegt, zwischen dem Innenmantel des Fortluftrohres 12 und dem Außenrand der Abscheidewendel 26 jedoch ein Abstand verbleibt, so dass von dort Wasser auf den Ablaufkragen 46 heruntertropfen kann.

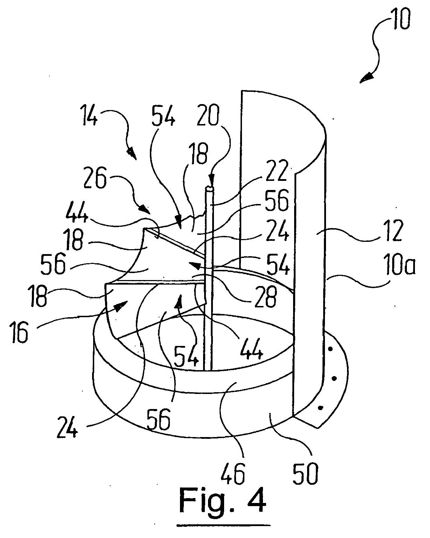

Figur 4 zeigt eine perspektivische Ansicht eines zweiten Ausführungsbeispiels der Abscheidevorrichtung 14. Dort tragen bereits erläuterte Komponenten dieselben Bezugszeichen. Es sind lediglich drei Wendelabschnitte 18 der Abscheidewendel 26 gezeigt, von denen eine teilweise weggebrochen dargestellt ist.

Die Wendelabschnitte 18 sind dort nicht als Stufenabschnitte 30, sondern als Wölbabschnitte 54 ausgebildet, deren jeweilige Abscheideoberfläche 28 in Blickrichtung auf die Abscheideoberfläche 28 konkav, also nach innen, gewölbt ist. Somit bildet die Abscheideoberfläche 28 der Abscheidewendel 26 bei diesem Ausführungsbeispiel eine Art Wellenfläche, deren Wellenspitzen die jeweiligen Wendelkanten 24 bilden. Beim vorliegenden Ausführungsbeispiel bildet jeder Wölbabschnitt 54 ein Konusflächensegment und deckt in Umfangsrichtung einen Winkel von 90° ab. Auch andere Erstreckungen in Umfangsrichtung sind hier möglich.

Die Wölbabschnitte 54 sind jeweils separate gewölbte Elemente 56, welche wiederum die gekanteten Befestigungsflansche 44 umfassen. Zwei benachbarte gewölbte Elemente 56 sind entsprechend an ihren Befestigungsflanschen 44 miteinander verbunden. Auch hier können die Bauteile miteinander vernietet oder aneinander geheftet sein.

Allgemeiner ausgedrückt können die Wendelabschnitte 18 der Abscheidewendel 26 separate Elemente sein, welche insbesondere gekantete Befestigungsflansche 44 umfassen; dies gilt nicht nur für die konkreten Stufenabschnitte 30 oder Wölbabschnitte 54, sondern auch für andere Bauarten der Wendelabschnitte 18.

## Patentansprüche

1. Vorrichtung zum Abscheiden von Flüssigkeit im Innenbereich eines im wesentlichen vertikalen Rohrabschnitts (10a), insbesondere eines Fortluft- oder Abgasrohres (10), mit
einer wendelartigen Abscheidestruktur (16) mit einer Vielzahl von Wendelabschnitten (18), die entlang einer zumindest geometrischen Wendelachse (20) angeordnet sind, wobei jeweils zwei benachbarte Wendelabschnitte (18) in unterschiedlichen Drehwinkellagen zur Wendelachse (20) angeordnet sind,
**dadurch gekennzeichnet, dass**
jeweils zwei benachbarte Wendelabschnitte (18) derart miteinander verbunden sind, dass zwischen zwei Wendelabschnitten (18) wenigstens eine radial verlaufende Wendelkante (24) ausgebildet ist und die Abscheidestruktur (16) als durchgehende Abscheidewendel (26) mit einer Abscheideoberfläche (28) ausgebildet ist.

2. Vorrichtung nach Anspruch 1, **dadurch gekennzeichnet, dass** ein Wendelabschnitt (18) als Stufenabschnitt (30) ausgebildet ist, welcher einen Fließstufenabschnitt (32) und einen Verbindungsstufenabschnitt (34) umfasst, die auf der Abscheideoberfläche (28) an der Wendelkante (24) einen Stufenwinkel (36) definieren.

3. Vorrichtung nach Anspruch 2, **dadurch gekennzeichnet, dass** der Fließstufenabschnitt (32) planar ist.

4. Vorrichtung nach Anspruch 2 oder 3, **dadurch gekennzeichnet, dass** der Fließstufenabschnitt (32) gegenüber einer Bezugsebene (38) verkippt ist, die senkrecht auf der Wendelachse (20) steht.

5. Vorrichtung nach einem der Ansprüche 2 bis 4, **dadurch gekennzeichnet, dass** der Verbindungsstufenabschnitt (34) planar ist.

6. Vorrichtung nach einem der Ansprüche 2 bis 5, **dadurch gekennzeichnet, dass** der Verbindungsstufenabschnitt (34) parallel zu einer Achsenebene (40) ausgerichtet ist, welche die Wendelachse (20) umfasst.

7. Vorrichtung nach einem der Ansprüche 2 bis 6, **dadurch gekennzeichnet, dass** zwei benachbarte Stufenabschnitte (30) separate gekantete Stufenelemente (42) sind, die an komplementär zueinander ausgebildeten Befestigungsflanschen (44) miteinander verbunden sind.

8. Vorrichtung nach einem der Ansprüche 1 bis 7, **dadurch gekennzeichnet, dass** ein Wendelabschnitt (18) als Wölbabschnitt (54) ausgebildet ist, dessen Abscheideoberfläche (28) in Blickrichtung auf die Abscheideoberfläche (28) konkav gewölbt ist.

9. Vorrichtung nach Anspruch 8, **dadurch gekennzeichnet, dass** zwei benachbarte Wölbabschnitte (54) separate gewölbte Elemente (56) sind, die an komplementär zueinander ausgebildeten Befestigungsflanschen (44) miteinander verbunden sind.

10. Vorrichtung nach einem der Ansprüche 1 bis 9, **dadurch gekennzeichnet, dass** die Abscheidestruktur (16) ein Zentralrohr (22) umfasst, welches die Wendelachse (20) definiert und die Wendelabschnitte (18) radial innen trägt.

11. Vorrichtung nach einem der Ansprüche 1 bis 10, **gekennzeichnet durch** einen koaxial und im Abstand zur Abscheidestruktur (16) angeordneten konischen Ablaufkragen (46), der sich in Richtung von der Abscheidestruktur (16) weg erweitert, wobei die lichte Kontur der Abscheidestruktur (16) den Ablaufkragen (46) wenigstens teilweise überlappt.

12. Vorrichtung nach einem der Anspruch 1 bis 11, **gekennzeichnet durch** eine Distanzhülse (50), welche koaxial zu der Abscheidestruktur (16) angeordnet ist und die Abscheidestruktur (16) und/oder das Zentralrohr (22) nach Anspruch 10 und/oder den Ablaufkragen (46) nach Anspruch 11 trägt.

13. Rohr zum Abführen von Fortluft oder Abgas, **dadurch gekennzeichnet, dass** im Innenbereich eines Rohrabschnitts (10a) eine Vorrichtung (14) zum Abscheiden von Flüssigkeiten nach einem der Ansprüche 1 bis 12 angeordnet ist.

## Claims

1. Device for separating a liquid in the interior of an essentially vertical pipe section (10a), in particular of a pipe (10) for outgoing air or exhaust gas, having
a helical separating structure (16) having a multiplicity of helix sections (18) that are arranged along an at least geometric helix axis (20), wherein in each case two adjacent helix sections (18) are arranged at different angular positions with respect to the helix axis (20),
**characterized in that**
in each case two adjacent helix sections (18) are connected to one another so as to form at least one radial helix edge (24) between two helix sections (18) and the separating structure (16) is formed as a continuous separating helix (26) with a separating surface (28).

2. Device according to Claim 1, **characterized in that** a helix section (18) is formed as a step section (30) which comprises a flow step section (32) and a connecting step section (34) that define a step angle (36) on the separating surface (28) at the helix edge (24).

3. Device according to Claim 2, **characterized in that** the flow step section (32) is planar.

4. Device according to either of Claims 2 and 3, **characterized in that** the flow step section (32) is tilted with respect to a reference plane (38) that is perpendicular to the helix axis (20).

5. Device according to one of Claims 2 to 4, **characterized in that** the connecting step section (34) is planar.

6. Device according to one of Claims 2 to 5, **characterized in that** the connecting step section (34) is oriented parallel to an axis plane (40) that includes the helix axis (20).

7. Device according to one of Claims 2 to 6, **characterized in that** two adjacent step sections (30) are separate angled step elements (42) that are connected to one another at mutually complementary attachment flanges (44).

8. Device according to one of Claims 1 to 7, **characterized in that** a helix section (18) is formed as a curved section (54) whose separating surface (28) is concave when viewed in the direction of the separating surface (28).

9. Device according to Claim 8, **characterized in that** two adjacent curved sections (54) are separate curved elements (56) that are connected to one another at mutually complementary attachment flanges (44).

10. Device according to one of Claims 1 to 9, **characterized in that** the separating structure (16) comprises a central pipe (22) that defines the helix axis (20) and provides radially inner support for the helix sections (18).

11. Device according to one of Claims 1 to 10, **characterized by** a conical discharge collar (46) which is arranged coaxially with and at a distance from the separating structure (16), and which widens in the direction away from the separating structure (16), wherein the open contour of the separating structure (16) at least partially overlaps the discharge collar (46).

12. Device according to one of Claims 1 to 11, **characterized by** a spacer sleeve (50) which is arranged coaxially with the separating structure (16) and supports the separating structure (16) and/or the central pipe (22) according to Claim 10 and/or the discharge collar (46) according to Claim 11.

13. Pipe for discharging outgoing air or exhaust gas, **characterized in that** there is arranged, in the interior of a pipe section (10a), a device (14) for separating liquids, according to one of Claims 1 to 12.

## Revendications

1. Dispositif de séparation de liquide à l'intérieur d'une portion de tube (10a) sensiblement verticale, en particulier d'un tube d'air d'échappement ou de gaz d'échappement (10), comprenant
une structure de séparation (16) en forme d'hélice comportant une pluralité de portions d'hélice (18) qui sont disposées le long d'un axe d'hélice (20) au moins géométrique, deux portions d'hélice (18) adjacentes étant chaque fois disposées à des positions angulaires de rotation différentes par rapport à l'axe d'hélice (20),
**caractérisé en ce que**
deux portions d'hélice (18) adjacentes sont chaque fois reliées ensemble de telle sorte qu'au moins un bord d'hélice (24) s'étendant radialement soit formé entre deux portions d'hélice (18) et que la structure de séparation (16) soit réalisée sous la forme d'une hélice de séparation continue (26) présentant une surface de séparation (28).

2. Dispositif selon la revendication 1, **caractérisé en ce qu'**une portion d'hélice (18) est réalisée sous la forme d'une portion de gradin (30), laquelle comprend une portion de gradin d'écoulement (32) et une portion de gradin de liaison (34) qui définissent un angle de gradin (36) sur la surface de séparation (28) au bord d'hélice (24).

3. Dispositif selon la revendication 2, **caractérisé en ce que** la portion de gradin d'écoulement (32) est plane.

4. Dispositif selon la revendication 2 ou 3, **caractérisé en ce que** la portion de gradin d'écoulement (32) est inclinée par rapport à un plan de référence (38) qui est perpendiculaire à l'axe d'hélice (20).

5. Dispositif selon l'une des revendications 2 à 4, **caractérisé en ce que** la portion de gradin de liaison (34) est plane.

6. Dispositif selon l'une des revendications 2 à 5, **caractérisé en ce que** la portion de gradin de liaison (34) est orientée parallèlement à un plan axial (40) qui comprend l'axe d'hélice (20).

7. Dispositif selon l'une des revendications 2 à 6, **caractérisé en ce que** deux portions de gradin (30) adjacentes sont des éléments de gradin (42) repliés séparés, qui sont reliés ensemble à des brides de fixation (44) de formes complémentaires.

8. Dispositif selon l'une des revendications 1 à 7, **caractérisé en ce qu'**une portion d'hélice (18) est réalisée sous la forme d'une portion bombée (54) dont la surface de séparation (28) est concave dans la direction du regard vers la surface de séparation (28).

9. Dispositif selon la revendication 8, **caractérisé en ce que** deux portions bombées (54) adjacentes sont des éléments bombés (56) séparés qui sont reliés ensemble à des brides de fixation (44) de formes complémentaires.

10. Dispositif selon l'une des revendications 1 à 9, **caractérisé en ce que** la structure de séparation (16) comprend un tube central (22), lequel définit l'axe d'hélice (20) et porte radialement vers l'intérieur les portions d'hélice (18).

11. Dispositif selon l'une des revendications 1 à 10, **caractérisé par** un col d'écoulement (46) conique disposé coaxialement et à distance de la structure de séparation (16), qui s'élargit dans la direction s'éloignant de la structure de séparation (16), le contour intérieur de la structure de séparation (16) chevauchant au moins partiellement le col d'écoulement (46).

12. Dispositif selon l'une des revendications 1 à 11, **caractérisé par** une douille d'écartement (50), laquelle est disposée coaxialement à la structure de séparation (16) et porte la structure de séparation (16) et/ou le tube central (22) selon la revendication 10 et/ou le col d'écoulement (46) selon la revendication 11.

13. Tube pour l'évacuation d'air d'échappement ou de gaz d'échappement, **caractérisé en ce qu'**un dispositif (14) de séparation de liquides selon l'une des revendications 1 à 12 est disposé à l'intérieur d'une portion de tube (10a).
